# EUROPÄISCHE PATENTSCHRIFT

(11) **EP 3 037 252 B1**
(45) Veröffentlichungstag und Bekanntmachung des Hinweises auf die Patenterteilung: **13.11.2019**
(21) Anmeldenummer: 15195508.5
(22) Anmeldetag: 19.11.2015
(51) Int. Cl.: B30B 9/30, B65F 1/14, B65F 3/04, B65G 65/23

(54) **BALLENPRESSE UND VERFAHREN ZUM BEFÜLLEN DER BALLENPRESSE**
BALING PRESS AND METHOD FOR FILLING THE BALING PRESS
PRESSE À EMPAQUETER ET PROCÉDÉ DE REMPLISSAGE DE PRESSE À EMPAQUETER

(30) Priorität: 19.11.2014 DE 102014116955
(43) Veröffentlichungstag der Anmeldung: 29.06.2016
(73) Patentinhaber: Schwelling, Hermann, 88682 Salem (DE)
(72) Erfinder: Schwelling, Hermann, 88682 Salem (DE)
(74) Vertreter: Weickmann, Hans

(56) Entgegenhaltungen:
- EP-A2- 2 537 668
- WO-A1-93/22227
- WO-A2-2012/135934
- AT-B- 332 306
- CN-A- 101 332 933
- DE-U1- 29 604 644
- DE-U1- 29 823 828
- GB-A- 2 224 261

## Beschreibung

Die Erfindung betrifft eine Ballenpresse, welche zum Verdichten von losem Material, insbesondere von Kartonagen oder dergleichen Abfall-/Verpackungsmaterial, zu Ballen verwendet wird; wobei der Sammelbehälter mittels der Hub-/Kippeinrichtung von einer Ausgangsposition in eine Entleerungsposition schwenkbar ist, so dass dann das lose Material durch die Schwerkraft aus dem Sammelbehälter heraus und durch den Einfüllschacht hindurch in einen Vorraum eines Pressraumes vor ein Pressorgan der Ballenpresse fällt und somit dieser Vorraum für den Pressvorgang befüllt wird.

Aus dem Stand der Technik sind verschiedene Einrichtungen an Ballenpressen zu deren Befüllung mit zu verdichtendem Material über einen Einfüllschacht bekannt. Bei einer ersten Variante wird die einen horizontal bewegbaren Presskörper aufweisende Ballenpresse von der Seite her über einen Einfüllschacht in Form einer Rutsche befüllt, wie z.B. bei einer Ballenpresse vom Typ DIXI 60 SLS (www.ballenpressen.eu /ballenpressen/horizontal-ballenpressen/ballenpresse-slk.html).

Bei einer zweiten Variante von Horizontal-Ballenpressen wird die auch von der Seite her befüllbare Ballenpresse nach der GB 2 169 550 A mittels einer Hub-/Kippeinrichtung befüllt. Mit der Hub-/Kippeinrichtung wird ein zeitweilig ankoppelbarer Sammelbehälter zunächst von einer Ausgangsstellung aus an einer Führungsbahn angehoben, bis er zumindest die Oberkante des Einfülltrichters erreicht hat, und danach dann zum Einfülltrichter hin geschwenkt, so dass das in dem Sammelbehälter vorhandene Abfall-Material, durch die Schwerkraft bewegt, in den Einfülltrichter hineinfallen kann.

Bei der oben schon genannten Horizontal-Ballenpresse vom Typ DIXI 60 SLS ist in einer Ausstattungsvariante auch die aus der GB 2 169 550 A bekannte Hub-/Kippeinrichtung vorgesehen. Eine mit Abfall-Material gefüllte Gitterbox wird zunächst in eine genügend hohe Position gebracht und danach zur Entleerung zum Einfüllschacht hin geschwenkt.

Aus der EP 2 537 668 A2 ist eine weitere Variante einer horizontal arbeitenden Ballenpresse bekannt. Bei dieser Ballenpresse wird vom sogenannten Heck der Ballenpresse aus ein befüllter Sammelbehälter mittels einer Hub-/Kippeinrichtung nach oben angehoben und zugleich kontinuierlich geneigt, also gekippt, so dass bei Erreichen des Einfüllschachtes der Inhalt des Sammelbehälters, durch die Schwerkraft bewegt, in den Einfüllschacht fällt. Um den Automatisierungsgrad für die Beschickung der Ballenpresse noch zu erhöhen und gleichzeitig den Bedienaufwand sowie den Flächenbedarf zu senken, ist dort die Hub-/Kippeinheit zum Bewegen des mit losem Material gefüllten Sammelbehälters von der Koppelposition, der Ausgangsposition, in die Entleerungsposition durch Schwenken um eine sowohl senkrecht zur Schwerkraftrichtung als auch senkrecht zur Vorschubrichtung verlaufende Schwenkachse so ausgebildet, dass zur An-und Abkopplung des Behälters eine mit einer Einschubhalterung versehene Halteeinheit vorhanden ist, wobei das Ankoppeln durch seitliches Einschieben in die Halteeinheit und das Abkoppeln durch Herausschieben aus der Halteeinheit erfolgt.

Trotz verschiedener Vorteile einer Heckbeschickung im Vergleich zur Beschickung von einem Seitenbereich der Ballenpresse her, besteht am Markt der Bedarf nach einer weiteren Erhöhung des Automatisierungsgrades für die Beschickung von einer, einen horizontal bewegbaren Presskörper aufweisenden Ballenpresse als auch Anforderungen dahingehend, sowohl den benötigten Flächenbedarf für die Aufstellung und für die Bedienung einer Ballenpresse als auch den Flächenbedarf und den Raumbedarf, insbesondere der Funktionshöhe, für die zeitweilige Positionierung des mit losem Material gefüllten Sammelbehälters an der Ballenpresse und für die Hub-und Kippbewegung zu seiner Entleerung in den Einfüllschacht der Ballenpresse hinein weiter zu optimieren, insbesondere zu verringern.

Weiterhin ist aus der WO 2012/135934 A2 eine Hub-/Kippeinrichtung bekannt, wie sie im Rahmen des Oberbegriffs des Anspruchs 1 beschrieben ist.

Die Aufgabe der vorliegenden Erfindung besteht daher darin, eine Ballenpresse horizontaler Bauart, einschließlich einer dabei vorhandenen Hub-/Kippeinrichtung, so weiter zu entwickeln, dass die notwendigen Funktionsflächen und/oder der notwendige Schwenkraum für die Handhabung eines Sammelbehälters an der Ballenpresse zu deren Befüllung mit Abfall-Material optimiert, insbesondere verringert werden kann. Eine Nebenaufgabe ist die Verringerung der Zeitspanne für das Entleeren des Sammelbehälters in den Einfüllschacht der Ballenpresse hinein und seine Zurückführung in seine Ausgangsposition.

Das Dokument DE 296 04 644 U1 offenbart eine Ballenpresse mit den Merkmale der Oberbegriffe der Ansprüche 1 und 2. Die Aufgabe wird gelöst durch eine Ballenpresse zum Verdichten von Abfall-Material, wie Kartonagen und dergleichen Verpackungsmaterial, mit den Merkmalen des Anspruches 1 sowie ein Verfahren mit den Merkmalen des Anspruchs 2.

Die Vorteile der Erfindung gegenüber bekannten Lösungen bestehen insbesondere darin, dass der Bedarf an Funktionsflächen neben der Ballenpresse für deren Betrieb geringer ist und dass zudem für das Befüllen der Ballenpressen mit Abfall-Material weniger Zeit benötigt wird, was auch positive Auswirkungen auf den Energieverbrauch hat. Ein weiterer Vorteil besteht darin, dass durch die neuartige Gestaltung der Hub-/Kippeinrichtung der Raumbedarf, insbesondere die Raumhöhe, welche für die Bewegung des Sammelbehälters von einer Ausgangsstellung in eine Endstellung zu seiner Entleerung benötigt wird, geringer ist.

Die Hub-/Kippeinrichtung zum Entleeren eines Sammelbehälters in eine Ballenpresse zum Verdichten von Abfall-Material, vorzugsweise losem Abfall-Material wie Kartonagen und dergleichen Verpackungsmaterial, ist in erster Linie für den Einsatz an so genannten horizontalen Ballenpressen konzipiert, insbesondere für Ballenpressen mit horizontal bewegbarem Presskörper, vorzugsweise für Horizontal-Ballenpressen mit einem auf der Seite des Ballenausstoßes angeordneten Tür, welche während des Pressvorganges zugleich die Gegenplatte für den Pressvorgang bildet.

Nach einem Aspekt wurde eine Hub-/Kippeinrichtung geschaffen, welche an einer Ballenpresse besagter Bauart vorteilhaft einsetzbar ist; sie ist vorzugsweise mit der Ballenpresse verbunden. Diese Ballenpressen haben einen horizontal bewegbaren, zeitweilig in ihren Pressraum einschiebbaren Presskörper zum Verdichten des Abfall-Materials zu Ballen. Die Befüllung der Ballenpressen mit Abfall-Material erfolgt über einen Einfüllschacht, welcher nach oben offen ist und nach unten in einen Sammelraum mündet. Mit der neuen Hub-/Kippeinrichtung wird ein mit Abfall-Material gefüllter Sammelbehälter aus seiner Ausgangsstellung, in welcher die Ankopplung des Sammelbehälters an die Hub-/Kippeinrichtung erfolgt, in eine Endstellung, zur Entleerung des losen Abfall-Materials infolge der Schwerkraft in die Öffnung des Einfüllschachtes hinein, bewegt. Das Abfall-Material fällt durch diesen Einfüllschacht hindurch in den mit dem Pressraum verbundenen Sammelraum und gelangt vor den Presskörper.

Die Hub-/Kippeinrichtung hat an ihrem einen Ende eine Halteeinrichtung in Form einer Halterung für die Ankopplung des Sammelbehälters. An ihrem anderen Ende ist die Hub-/Kippeinrichtung mit einem Antrieb, vorzugsweise mit einem Hydraulikzylinder, verbunden. Ferner besitzt die Hub-/Kippeinrichtung Mittel zum Transformieren der von dem Antrieb bereit gestellten Kraft um einer schwenkenden Hebebewegung, einer ersten Bewegung - der Grundbewegung - eine weitere Schwenkbewegung für den Sammelbehälter zu überlagern. Die erste Bewegung wird auch Schwenk-Hubbewegung genannt.

Diese Mittel zum Überlagern der Bewegungen sind erfindungsgemäß derart angeordnet, dass die erste Bewegung um ein erstes Gelenk erfolgt, während die zweite Bewegung, die weitere Schwenkbewegung, um ein weiteres Gelenk erfolgt. Das erste Gelenk wird auch zentrales Gelenk genannt.

Würde man je einen Kreisbogen bezüglich der unteren, hinteren Kante und bezüglich der hinteren, oberen Kante des Sammelbehälters um das erste Gelenk herum schlagen, so bewegen sich gemäß der Erfindung die hintere untere und die hintere obere Kante des Sammelbehälters beim Entleeren immer innerhalb der gedachten Kreisbögen. Dieses hat den Vorteil, dass zum Entleeren des Sammelbehälters weniger Bauhöhe benötigt wird. Dies ist besonders vorteilhaft bei niedrigen Hallendecken.

Genauer gesagt sind die Bewegungslinien, welche die äußeren Körperkanten des Sammelbehälters bzw. der Halterung während der Bewegung von der Ausgangsstellung in die Endstellung zum Entleeren des Sammelbehälters und der Zurückführung in seine Ausgangsstellung beschreiten, und welche letztendlich die notwendige Raumhöhe für den Betrieb der Ballenpresse mit einer Hub-/Kippeinrichtung bestimmen, jeweils betragsmäßig kleiner als der betreffende Kreisbogen, der sich aus dem Radius zwischen dem ersten Gelenk, dem zentralen Gelenk der Hub-/Kippeinrichtung, und der betreffenden Körperkante ergibt.

Vorzugsweise sind diese Bewegungslinien der Körperkanten bei der neuen Hub-/Kippeinrichtung je eine Kurvenbahn. Jede Kurvenbahn der Eckpunkte hat entlang ihrem Verlauf zwischen ihrem Anfang und Ihrem Ende in Bezug auf das zentrale Gelenk eine Vielzahl unterschiedlicher Radien. Im Wesentlichen Ändern sich die Radien während der Bewegung ständig. Diese Kurvenbahnen sind also zudem keine Kreisbögen.

Vorteilhaft ist das weitere Gelenk für die zweite Schwenkbewegung des Sammelbehälters am Hebearm, mit welchem die Schwenk-Hubbewegung ausgeführt wird, mit Abstand zum ersten Gelenk, dem zentralen Gelenk, angeordnet. Dieses weitere Gelenk hat eine Wirkverbindung zur Halterung für den Sammelbehälter. Diese zweite Schwenkbewegung des Sammelbehälters ist so, dass sich eine zur Hub-/Kippeinrichtung bzw. zur Ballenpresse zeigende Oberkante des in der Hub-/Kippeinrichtung positionierten und arretierten Sammelbehälters während der Schwenk-Hubbewegung zum Hebearm hin neigt.

Nach einer Ausführungsvariante sind die Mittel zum Transformieren der von dem Antrieb bereit gestellten Kraft derart angeordnet, dass die Geschwindigkeit der Hebebewegung und die Geschwindigkeit der weiteren Schwenkbewegung zueinander verschieden sind.

Zudem wird eine weitere Verringerung der Taktzeit für das Entleeren des Sammelbehälters in die Ballenpresse hinein erreicht, wenn die Mittel zum Transformieren der von dem Antrieb bereit gestellten Kraft derart angeordnet sind, dass die Hebebewegung und/oder die weitere Schwenkbewegung zwischen der Ausgangsstellung und der Endstellung des bewegten Sammelbehälters nicht gleichmäßig ist.

Nach einer weiteren Ausführungsvariante ist der Hebearm zweiteilig. Ein mit der Halterung verbundener Endabschnitt des Hebearms ist ein schwenkbarer Schenkel. Dieser schwenkbare Schenkel ist am Hebearm an einem weiteren Gelenk angelenkt. Dieses weitere Gelenk ist mit Abstand zum ersten Gelenk, dem zentralen Gelenk, an dem anderen Abschnitt des Hebearms, dem vorderen Abschnitt, in Nähe des Endabschnittes angeordnet. Dieser schwenkbare Schenkel wird in der Beschreibung auch dritter Hebel genannt. Während der schwenkenden Hebebewegung des Hebearms wird dieser Schenkel in seiner Lage bezüglich dem vorderen Abschnitt des Hebearms verstellt, sodass die Gesamtlänge des Hebearms verkürzt wird. Dies ist erfindungsgemäß eine weitere Maßnahme, mit der erreicht ist, dass die Bewegungslinien der äußeren Körperkanten des Sammelbehälters innerhalb besagter Kreisbögen liegen. Zudem wird hiermit erreicht, dass die Radien dieser kurvenbahnförmigen Bewegungslinien betragsmäßig wesentlich kleiner sind als die besagten Kreisbögen.

Durch die erfindungsgemäßen Maßnahmen ist dieser Vorteil der kurzen Radien insbesondere dann vorhanden, wenn der Sammelbehälter in dem Bereich oberhalb der Ballenpresse bewegt wird.

Nach einer Ausführungsvariante sind die Mittel zum Erzeugen der besagten Hebebewegung und der weiteren Schwenkbewegung zum Bewegen des Sammelbehälters aus einer Ausgangsstellung in eine Entleerungsposition/Endpositionen zwei miteinander gekoppelte Viergelenkgetriebe. Vorteilhaft weisen die miteinander gekoppelten Viergelenkgetriebe längeneinstellbare Mittel auf. Mit diesen längeneinstellbaren Mitteln kann zum einen eine Justierung der Viergelenkgetriebe vorgenommen werden, insbesondere eine Nachjustierung im Sinne einer vorbeugenden Wartung bzw. Anpassung an die örtlichen Gegebenheiten bei der Aufstellfläche für die Ballenpresse.

Vorteilhaft ist vorgesehen, dass das erste Viergelenkgetriebe mit einem ersten Hebel mit einem ersten Gelenk, mit einem zweiten Hebel mit einem zweiten Gelenk und mit einem dritten Hebel mit einem dritten Gelenk und mit einem vierten Gelenk gebildet ist.

Das zweite Viergelenkgetriebe ist bevorzugt aus einem Endbereich des ersten Hebels, dem dritten Hebel, einem längeneinstellbaren vierten Hebel und einem fünften Hebel gebildet, wobei der fünfte Hebel mit einem Verbindungssteg mit der Halterung für den Sammelbehälters verbunden ist.

Das zweite Viergelenkgetriebe ist mit dem Endbereich des ersten Hebels, mit einem siebenten Gelenk und dem dritten Gelenk an dem ersten Viergelenkgetriebe angekoppelt. Die Hebel des zweiten Viergelenkgetriebes sind mittels dem dritten Gelenk, einem fünften Gelenk, einem sechsten Gelenk und einem siebenten Gelenk miteinander in Wirkverbindung und zueinander beweglich angeordnet.

Durch die Kombination von Viergelenkgetrieben, insbesondere von miteinander gekoppelter Viergelenkgetriebe, kann die neue Hub-/Kippeinrichtung bei ihrer Verwendung an Ballenpressen, vorzugsweise horizontaler Bauart, sowohl vom Heck aus als auch von ihrer Stirnseite, der Ballenauswurfseite, aus beschickt werden.

Durch das verbesserte Bewegungsverhalten der Hub-/Kippeinrichtung wird bei einer Ballenpresse der notwendige Schwenkraum für den Sammelbehälter weiter verringert, so dass - gegenüber bekannten Lösungen - ein Raum mit einer geringeren Bauhöhe für den Betrieb der Ballenpresse benötigt wird; insbesondere dann, wenn mit der Ballenpresse Ballen in "Normgröße" hergestellt werden, wodurch die Dimensionen der Ballenpresse im Wesentlichen vorgegeben sind. Versuche haben ergeben, dass die notwendige Raumhöhe wesentlich kleiner als 3 m sein kann.

Nach einer Ausführungsvariante ist der Antrieb der Hub-/Kippeinrichtung, vorzugsweise ein Hydraulikzylinder, mit dem Ende seiner Kolbenstange, an einem Hebelarm des ersten Hebels angekoppelt. Beispielsweise ist dieser Hebelarm ein abgewinkeltes Ende des Hebels

Eine weitere vorteilhafte Ausführungsform der Hub-/Kippeinrichtung wird darin gesehen, dass der erste Hebel mit seinem ersten Gelenk und der zweite Hebel mit seinem an seinem abgewinkelten Ende vorgesehenen zweiten Gelenk wenigstens an einer Grundplatte angeordnet sind, wobei die Grundplatte vorzugsweise an einer Seitenwand der Ballenpresse befestigt ist, vorzugsweise im Bereich eines zweiten Gehäusemoduls eines Gehäuses der Ballenpresse.

Nach einem anderen Aspekt der Offenbarung sind die Mittel zum Transformieren der von dem Antrieb bereitgestellten Kraft je ein Kettentrieb für die Hubbewegung und die Schwenkbewegung. Vorzugsweise ist wenigstens bei einem der Kettentriebe wenigstens ein Zahnrad der Zahnräder zum Antrieb und/oder zur Umlenkung und/oder zur Übertragung der Drehmomente exentrisch zu den Drehachsen der Hebel für das Heben und/oder für das Schwenken des Sammelbehälters angeordnet, sodass auch bei dieser Variante der Erfindung die Hubbewegung des Sammelbehälters und die Schwenkbewegung des Sammelbehälters während der Bewegung zum Entleeren des Sammelbehälters und seiner Zurückführung in seine Ausgangsstellung zumindest zeitweilig überlagert sind. Zudem werden hierdurch auch verschiedene Bewegungsgeschwindigkeiten in der Hubbewegung und in der Schwenkbewegung selbst als auch der Hubbewegung und der Schwenkbewegung zueinander möglich.

Weitere Einzelheiten, Merkmale und Vorteile der Erfindung werden in dem folgenden Beschreibungsteil genannt und näher erläutert und sind zudem in Verbindung mit der Beschreibung und den in Zeichnungen schematisiert dargestellten Ausführungsbeispielen der Erfindung offenbart, dabei zeigen:
- Fig.1: eine erfindungsgemäße Ballenpresse horizontaler Bauart mit einer Hub-/Kippeinrichtung in Seitenansicht;
- Fig.2: die Hub-/Kippeinrichtung nach Figur 1, ohne die Ballenpresse, in Grundstellung;
- Fig. 2a: eine vergrößerte Ansicht eines Abschnittes der Darstellung nach Figur 2;
- Fig.3: die Hub-/Kippeinrichtung nebst der Ballenpresse nach Figur 1 in einer schematischen Darstellung und in der Grundstellung;
- Fig.4: die Hub-/Kippeinrichtung nach Figur 3 in einer oberen Stellung;
- Fig.5 und Fig.6: Darstellungen zu verschiedenen Positionen des Sammelbehälters während seiner Hub- und seiner Schwenkbewegung;
- Fig. 7: eine Ballenpresse horizontaler Bauart in schematischer Darstellung in Seitenansicht;
- Fig.8: die Ballenpresse nach Figur 7 in Draufsicht
und
- Fig. 9: die Ballenpresse nach Figur 7 in Draufsicht gemäß Figur 8 nebst den nach der Erfindung benötigten Funktionsflächen;
sowie
- Fig. 10: die Ballenpresse nach Figur 7 in Draufsicht gemäß Figur 8 nebst den nach dem Stand der Technik benötigten Funktionsflächen.

Die in den Figuren angezogenen Bezugsziffern haben jeweils die gleiche Bedeutung, auch wenn sie in der Beschreibung der Ausführungen nicht zu jeder Figur ausdrücklich genannt werden. Begriffe wie "links", "rechts", "oben" oder "unten" sind jeweils und lediglich bezüglich der Darstellung in den Figuren genannt; in der tatsächlichen Anordnung in der Praxis können sich andere Positionen ergeben. Weiterhin wird darauf hingewiesen, dass die Figuren keine technischen Zeichnungen sind, weshalb teilweise Schraffuren und Abbruchlinien fehlen. Auch können die relativen Dimensionen von der Wirklichkeit abweichen.

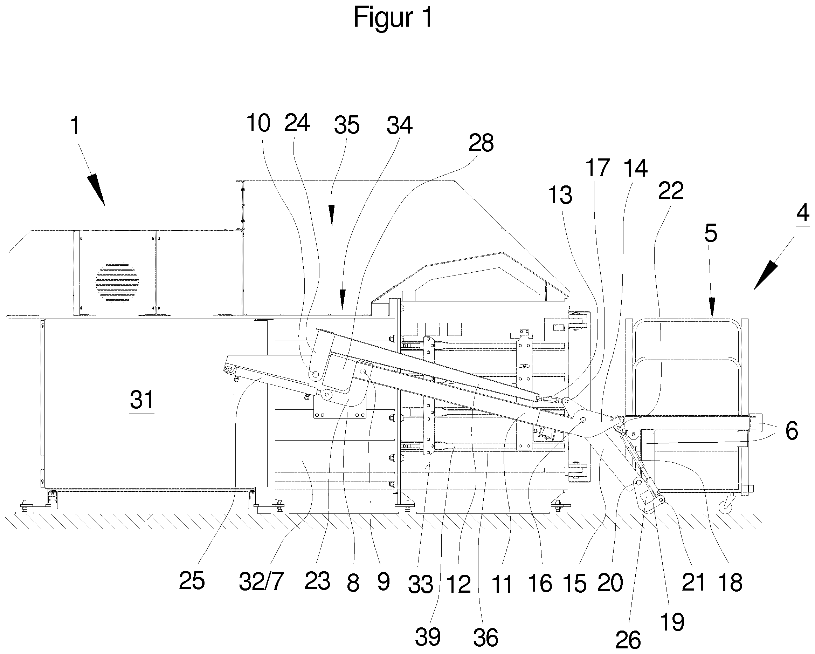

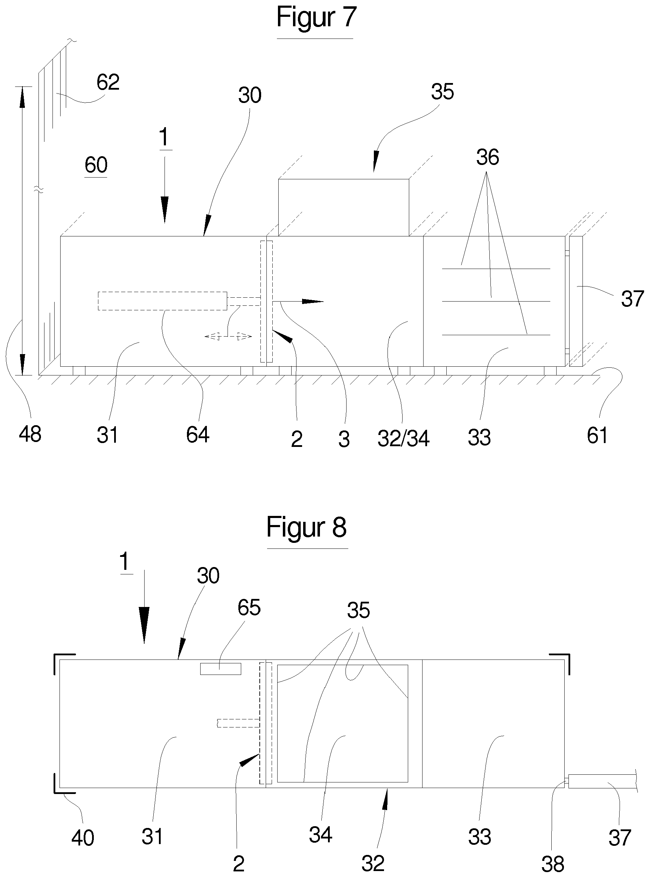

Figur 1 zeigt eine erfindungsgemäße Ballenpresse 1 horizontaler Bauart zum Verdichten von losem Abfall-Material, zum Beispiel von Kartonagen und dergleichen Verpackungsmaterial, mit der neuen Hub-/Kippeinrichtung 4 gemäß der Erfindung. Die Ballenpresse 1 umfasst in bekannter Weise zumindest ein Gehäuse 30, siehe auch die Figuren 7 bis 9, mit einem hinteren Gehäusemodul 31 - für die Aufnahme der Antriebseinheit -, einem mittleren Gehäusemodul 32 und einem vorderen Gehäusemodul 33, in welchem der Pressraum vorgesehen ist und in dem die Verdichtung des losen Materials zu Ballen erfolgt.

Über dem mittleren Gehäusemodul 32 ist ein Einfüllschacht 35 angeordnet, welcher nach oben offen ist und nach unten in einen vor dem Pressraum 33 angeordneten Sammelraum 34 mündet, siehe auch die Figuren 7 bis 9.

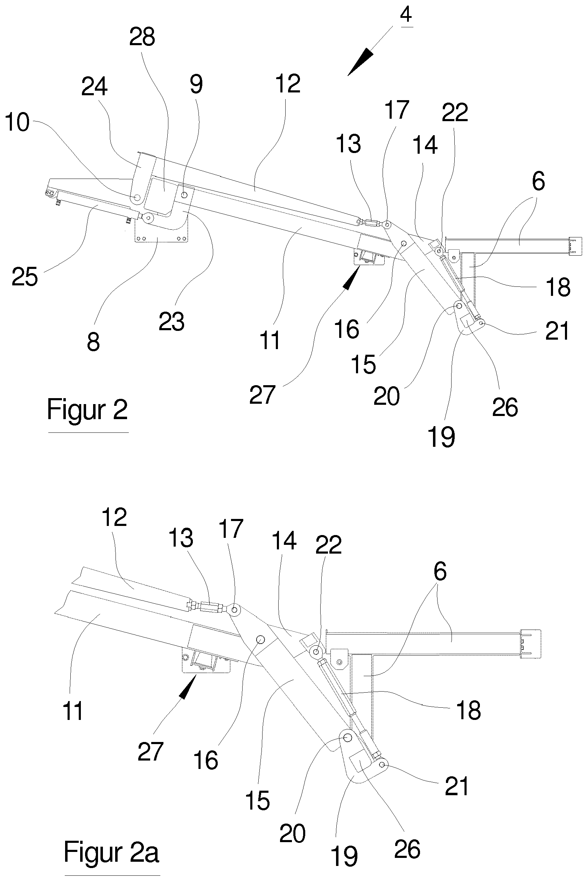

An der Ballenpresse 1 ist eine Hub-/Kippeinrichtung 4, siehe auch Figur 2, zum Heben und Schwenken sowie zusätzlichen Neigen eines mit losem Abfall-Material gefüllten Sammelbehälters 5 angeordnet. Der Sammelbehälter 5 ist in einer Einschubhalterung der Halterung 6 aufgenommen. Der Sammelbehälter 5 ist hier in einer Grundstellung, der Ausgangsstellung.

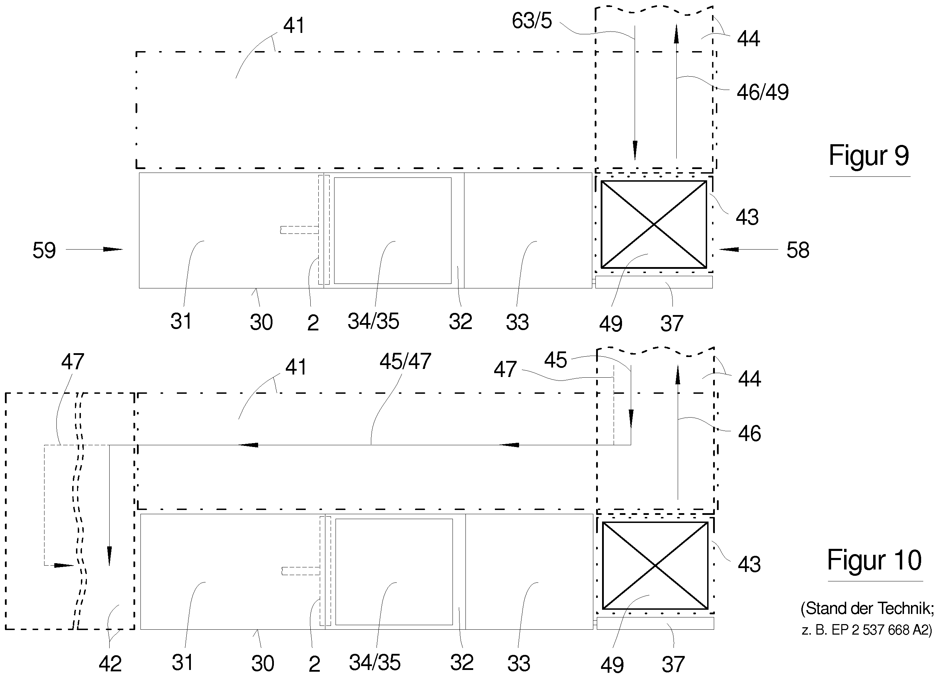

Die Halterung 6 für die Aufnahme des Sammelbehälters 5 ist so, dass der Sammelbehälter 5 von der Seite her, also von der Bedienseite der Ballenpresse her, in die Halterung 6 eingeschoben werden kann. Die Halterung 6 hat eine Ankopplung, in Form eines Verbindungsteiles 26, an die Hub-/Kippeinrichtung 4, mittels der der Sammelbehälter 5 aus der Ausgangsstellung, seiner Grundstellung, in eine Entleerungsposition angehoben, geschwenkt und zudem geneigt werden kann, in der das Abfall-Material infolge der Schwerkraft in die Öffnung des Einfüllschachtes 35 fällt und durch diesen hindurch in den Sammelraum 34 gelangt. Anschließend erfolgt durch eine nicht näher dargestellte, an sich bekannte Vorschubeinrichtung mit einem Presskörper 2, siehe Figur 7, ein Verdichten des Abfall-Materials zu einem Ballen mittels einem oder mehrerer Presshübe. Nach Erreichen der vorgeschriebenen Ballengröße wird die Tür 37, welche die Austrittsöffnung des Pressraumes für das Pressen verschließt und zugleich die Gegenplatte für den Pressvorgang bildet, geöffnet und der fertig gestellte Ballen kann in der vorgegebenen Vorschubrichtung, der Pressrichtung 3, siehe Figur 7, auf die stirnseitig 58 vor dem Gehäuse 30 vorgesehene Fläche 43 geschoben werden, siehe Figur 9. Vor dem Öffnen der Tür 37 wird die Halterung 6, mit oder ohne Sammelbehälter 5, in eine Position oberhalb des Gehäuses 30 angehoben, vorzugsweise in die Endstellung, sodass die Tür 37, als auch die im vorderen Gehäusemodul 33 vorgesehenen Schlitze 36 ungehindert zugänglich sind.

Die Halterung 6 für die Aufnahme und Ankopplung des Sammelbehälters 5 an die Hub-/Kippeinrichtung 4 ist erfindungsgemäß bei der Ballenpresse 1 an der Seite des Ballenauswurfes vorgesehen, also stirnseitig 58, und nicht wie in bekannter Weise am Heck 59, wie bei einer Ballenpressen nach dem Stand der Technik, z.B. einer Ballenpresse nach der EP 2 537 668 A2.

Zur An- und Abkopplung des Sammelbehälters 5 an die Hub-/Kippeinrichtung 4 ist die in bekannter Weise ausgebildete Einschubhalterung an der Halteeinheit/Halterung 6 vorhanden. Das Ankoppeln des Sammelbehälters 5 erfolgt durch Einschieben in die Halteeinheit 6 und das Entkoppeln durch Herausschieben.

Nach der Offenbarung besteht die Hub-/Kippeinrichtung 4 der Ballenpresse 1 aus zwei miteinander gekoppelten Viergelenkgetrieben. An einer der beiden Seitenwände 7 der Ballenpresse 1, vorzugsweise im Bereich des mittleren Grundmoduls 32, ist eine Grundplatte 8 angeordnet. An der Grundplatte 8 ist ein erstes Gelenk 9 für einen ersten Hebel 11 und ein zweites Gelenk 10 für einen zweiten Hebel 12 angeordnet. Die Gelenke haben unter anderem die Funktionen eines Drehlagers.

Der erste Hebel 11 hat nach der Verbindungsstelle mit dem ersten Gelenk 9 ein abgewinkeltes Ende 23. Der zweite Hebel 12 hat ein abgewinkeltes Ende 24. Dieses abgewinkelte Ende 24 ist mit dem zweiten Gelenk 10 verbunden.

An dem zum abgewinkelten Ende 24 des zweiten Hebels 12 gegenüberliegenden Ende von selbigen ist ein längeneinstellbares Ausgleichselement 13 angeordnet. Am Ende des Ausgleichselementes 13 und im Endbereich 14 des ersten Hebels 11 ist ein dritter Hebel 15 mittels eines dritten Gelenkes 16 und einem gegenüberliegenden vierten Gelenk 17 am ersten Hebel 11 am Ausgleichselement 13 angelenkt.

Die Hebel 11,12,15 mit den Gelenken 9,10,16,17 bilden somit ein erstes Viergelenkgetriebe.

Ein angekoppeltes zweites Viergelenkgetriebe wird aus dem Endbereich 14 des ersten Hebels 11, dem dritten Hebel 15, einem längeneinstellbaren vierten Hebel 18 sowie einem fünften Hebel 19 gebildet, wobei an dem fünften Hebel 19 ein Verbindungsteil 26 für die Verbindung mit der Halterung 6 angeordnet ist.

Das längeneinstellbare Ausgleichselement 13 und der längeneinstellbare vierte Hebel 18 dienen zumindest dazu, Toleranzen im Hebelsystem der Hub-/Kippeinrichtung 4 auszugleichen. Der vierte Hebel 18 hat auch die Funktion eines Zugarms.

Der dritter Hebel 15 ist mittels eines fünften Gelenkes 20 an dem fünften Hebel 19 und der längenverstellbare vierte Hebel 18 mittels eines sechsten Gelenkes 21 an dem fünften Hebel 19 angelenkt. Der vierte Hebel 18 ist mit einem siebten Gelenk 22 am Endbereich 14 des ersten Hebels 11 angelenkt.

Am abgewinkelten Ende 23 des ersten Hebels 11 ist die Kolbenstange des Hydraulikzylinders 25 angekoppelt. Durch Betätigung des Hydraulikzylinders 25 bewegt sich die Hub-/Kippeinheit 4 und der Sammelbehälter 5 wird angehoben, geschwenkt und zugleich geneigt bis er seine obere Endstellung, die Entleerungsposition, erreicht. Mit diesem Neigen bzw. Kippen wird die Lage der zur Ballenpresse hin zeigenden Oberkante des Sammelbehälters 5 in Bezug auf den Hebearm 11, bzw. dem ersten Hebel 11 und dem zweiten Hebel 12, verändert. Diese Oberkante neigt sich bei der Bewegung "Heben" zum Hebearm 11 hin. Bei der umgekehrten Bewegung, also der Bewegung des Sammelbehälters zu seiner Ausgangsstellung zurück, wird die erzielte Neigung wieder aufgehoben.

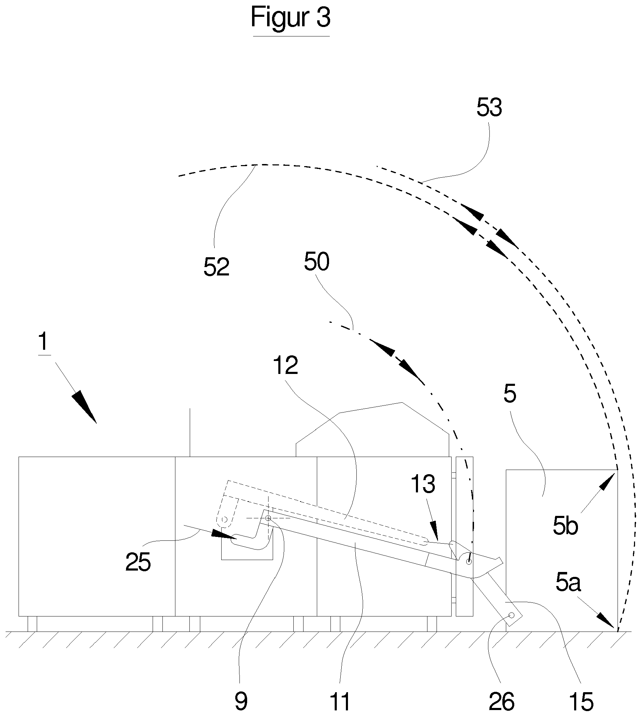

In der Endstellung ist der Sammelbehälter 5 so gekippt, dass das lose Abfall-Material - das Pressgut - durch die Schwerkraft in den offenen Einfüllschacht 35 nach unten in den Sammelraum 34 fällt. Dieser Ablauf ist, neben anderen Details, in den Figuren 3 bis 6 gezeigt.

Ein erheblicher Vorteil der Hub-/Kippeinrichtung 4 besteht darin, dass das Anheben des Sammelbehälters 5 entsprechend den Figuren 3 bis 6 platzsparend, insbesondere in Bezug auf die erforderliche Raumhöhe, erfolgt.

In den Figuren 3 bis 6 sind, zur besseren Übersichtlichkeit, die in den Figuren 1 und 2 gezeigte Ballenpresse 1 und die Hub-/Kippeinrichtung 4 vereinfacht dargestellt.

In der Figur 3 zeigen die Kreisbögen 52 und 53 wie sich die äußeren Kanten 5a, 5b des Sammelbehälters 5 während einer Hubbewegung zum Entleeren des Sammelbehälters 5 und Befüllen des Einfüllschachtes 35 bzw. des Sammelraums 34, bewegen, wenn die Hub-/Kippeinrichtung ausgeführt wäre, wie zum Beispiel bei einer Ballenpresse mit Hub-/Kippeinrichtung nach der EP 2 537 668 A2. Bei einer solchen Hub-/Kippeinrichtung ist der zweite Hebel 12 nicht vorhanden, weshalb dieser in der Figur 3 mit einer gestrichelten Linie gezeigt ist. Der Kreisbogen 50 beschreibt in etwa die Linie, welche von einem freien Endabschnitt des Hebearms bei der Bewegung "Heben" zurückgelegt wird.

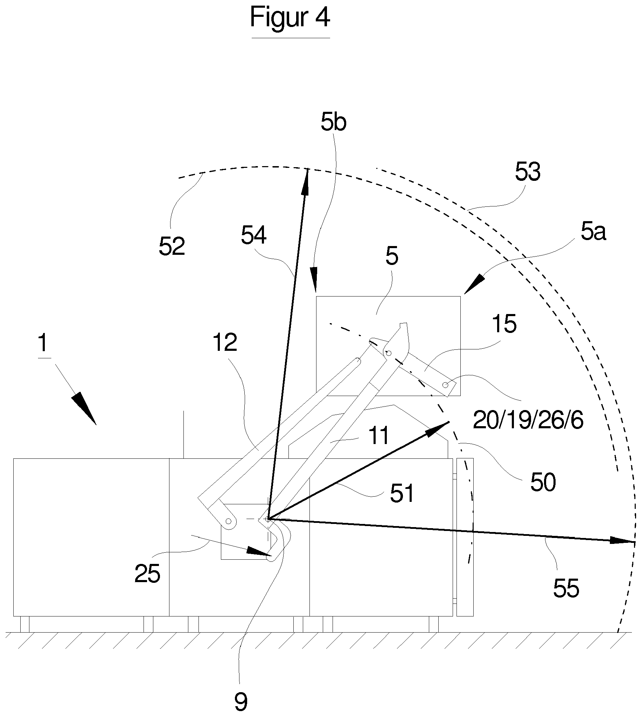

Die zu dem ersten Kreisbogen 50, dem zweiten Kreisbogen 52 und dem dritten Kreisbogen 53 gehörenden Radien 51, 54 und 55 sind in der Figur 4 gezeigt.

In der Figur 4 ist der nach dem erfindungsgemäßen Verfahren angehobene und zugleich zumindest teilweise gekippte Sammelbehälter 5 in einer Zwischenposition zwischen der Ausgangsstellung und der Endstellung gezeigt. Deutlich ist erkennbar, dass die äußeren Körperkanten 5a, 5b des Sammelbehälters 5 eine wesentlich geringere Raumhöhe benötigen, als bei einem Schwenken mit Vorrichtungen nach dem Stand der Technik.

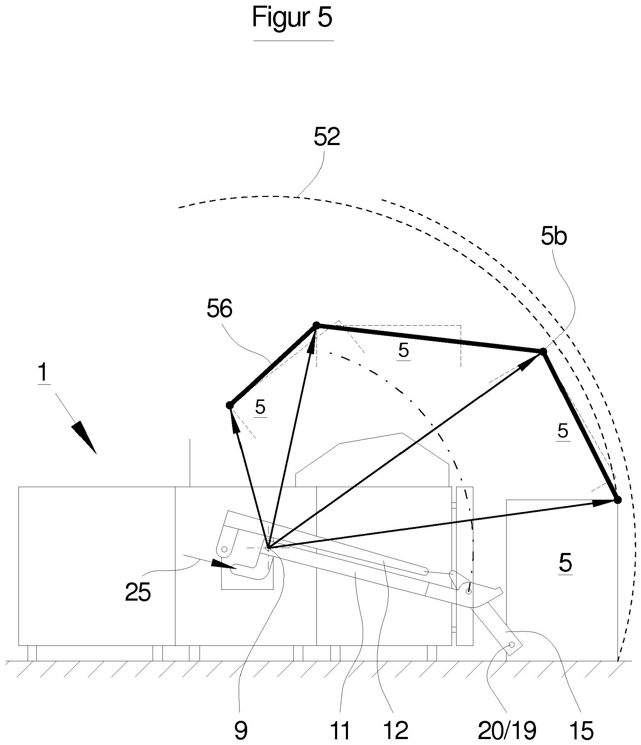

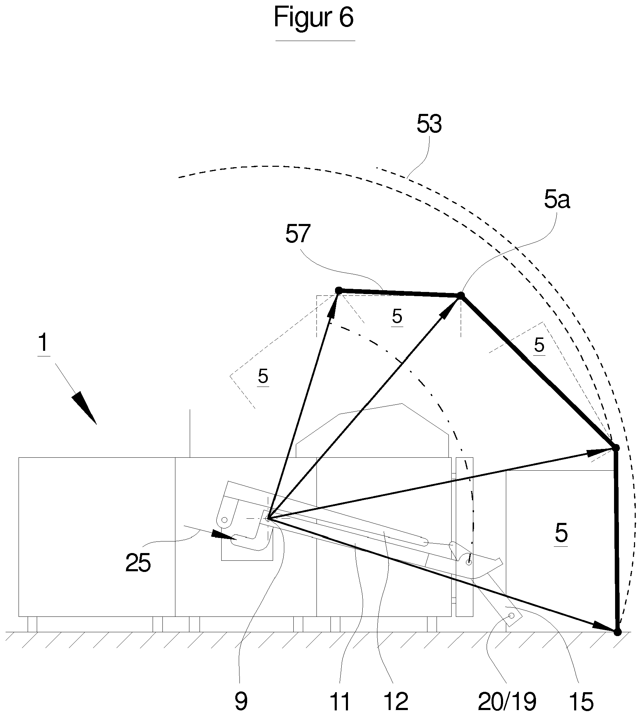

In der Figur 5 ist der an die Hub-/Kippeinrichtung 4 angekoppelte Sammelbehälter 5 zunächst in seiner Ausgangsstellung gezeigt. Die Bewegungslinie 56 zeigt - in der Höhe gesehen - die räumliche Bewegung der oberen äußeren Kante 5b des Sammelbehälters 5 in verschiedenen Hebe- und Schwenkpositionen bis hin zu der Endstellung, der Entleerungsposition. Anhand der Darstellung ist erkennbar, dass die Bewegungslinie der äußeren oberen Kante des Sammelbehälters eine wesentlich geringere Raumhöhe erfordert. Die Bewegungslinie 56 ist in der hier gezeigten Darstellung aufgrund der herangezogenen vier Positionspunkte, ein Polygonzug, tatsächlich ist die Bewegungslinie 56 eine Kurvenbahn, welche kein Kreisbogen ist. Die Darstellung in der Figur 6 zeigt das gleiche wie die Figur 5, nur bezüglich der unteren, äußeren Kante 5a des Sammelbehälters 5 während seiner Bewegung von der Ausgangsstellung in die Endstellung. Die von dieser unteren äußeren Kante 5a beschrittene Bewegungslinie hat das Bezugszeichen 57. Auch hier gilt, bei der tatsächlichen Bewegung ist die Bewegungslinie 57 eine Kurvenbahn, auch diese ist kein Kreisbogen.

Die Figuren 7, 8 und 9 zeigen in stark schematisierter Darstellung die erfindungsgemäße Ballenpresse 1 nach Figur 1, aufgestellt in einem Arbeitsraum 60. Der Arbeitsraum besitzt eine Bodenfläche 61. Die Ballenpresse 1 ist, besser gesagt, kann durch die Benutzung der Erfindung sehr nah an einer Seitenwand 62 aufgestellt werden.

In der Figur 7 ist die Ballenpresse in einer (teils) perspektivischen Darstellung gezeigt, die Tür 37 ist geschlossen, sodass der Pressraum 33 hier eine Presskammer ist. Zur besseren Übersichtlichkeit wurde hier und in den Figuren 8 und 9 auf die Darstellung der Hub-/Kippeinrichtung 4 verzichtet. Mit dem Bezugszeichen 48 ist die Funktionshöhe bezeichnet, die für den Betrieb der Ballenpresse und der zugehörigen Hub-/Kippeinrichtung 4 in einem Arbeitsraum 60 benötigt wird.

Die Figur 8 zeigt eine Draufsicht zur Darstellung nach Figur 7. Die Tür 37 ist geöffnet, sodass ein fertig gestellter Ballen ausgeschoben werden kann. Mit der Strich-Punkt-Linie 40 ist die Fläche angedeutet, die für das Aufstellen der Ballenpresse 1 benötigt wird, es ist die Aufstellfläche 40.

In der Figur 9 wird die erfindungsgemäße Ballenpresse 1 gemäß Darstellung nach Figur 8 gezeigt. Zudem sind in dieser Darstellung die für den Betrieb der Ballenpresse 1 unmittelbar neben der Ballenpresse 1 benötigten Funktionsflächen und Laufwege für den Bediener mit unterschiedlichen Linienarten schematisch gezeigt.

An der Stirnseite 58 der Ballenpresse 1, also vor dem vorderen Gehäusemodul 33 ist eine Fläche 43 für den Ballenauswurf vorgesehen. Seitwärts davon wird für den Abtransport eines Ballens 49 eine Transportfläche 44 benötigt. Vor der Bedienseite der Ballenpresse 1 ist eine Lauffläche 41 für den Bediener notwendig. Mit dem Bezugszeichen 46 ist der Weg für den Abtransport eines Ballens 9 gekennzeichnet. Auf der Transportfläche 44 liegt auch der Transportweg 63 für das Zuführen eines gefüllten Sammelbehälters 5 zur Halterung 6 der Hub-/Kippeinrichtung 4.

Bei der erfindungsgemäßen Ballenpresse 1 wird bei geschlossener Tür 37 die Fläche 43 für den Ballenauswurf zugleich als Stellfläche für den Sammelbehälter 25 zum Ankoppeln an die Halterung 6 verwendet. Die Stellfläche 42 - nach Stand der Technik - ist also von der Heckseite 59 an die Stirnseite 58 unmittelbar vor das vordere Gehäusemodul 33 verlagert worden. Somit wird für den Ballenauswurf und für die Grundposition des Sammelbehälters 5 neben der Ballenpresse 1 nur noch eine Fläche benötigt. Die Fläche 43 und die Stellfläche 42 fallen also in eine gleiche Fläche, wodurch die insgesamt benötigte Funktionsfläche neben der Ballenpresse 1 verringert werden kann.

Durch die erfindungsgemäße Ausführung der Ballenpresse1 werden im Bereich der Heckseite 59 der Ballenpresse 1 keine Funktionsflächen benötigt. Mit der vorliegenden Hub-/Kippeinrichtung 4 wird zudem die Möglichkeit geschaffen, derartige Ballenpressen auch in Räumen mit relativ geringer Deckenhöhe einzusetzen.

Zur Verdeutlichung dieser Vorteile der Erfindung ist zum Vergleich mit der in der Figur 9 gezeigten erfindungsgemäßen Ballenpresse 1 in der Figur 10 eine Ballenpresse gleicher horizontaler Bauart schematisch dargestellt. Zudem sind in der Figur 10 noch die weiteren, zusätzlichen Funktionsflächen und Funktionswege eingezeichnet, die notwendig sind, wenn eine Hub-/Kippeinrichtung nach dem Stand der Technik verwendet würde.

Mit dem Bezugszeichen 45 ist ein zweiter Transportweg für die Zuführung eines Sammelbehälters 5 markiert. Mit der Stellfläche 42 ist die Fläche bezeichnet, in welcher der Sammelbehälter 5 in einer Ausgangsstellung ist, wenn er mit einer Hub-/Kippeinrichtung aus dem Stand der Technik, zum Beispiel einer Hub-/Kippeinrichtung nach der EP 2 537 668 A2 bewegt wird.

Mit dem Bezugszeichen 47 ist ein erster Transportweg für die Zuführung eines Sammelbehälters 5 markiert. Mit der Stellfläche 42 ist die Fläche bezeichnet, in welcher der Sammelbehälter 5 in einer Ausgangsstellung ist, wenn er mit einer Hub-/Kippeinrichtung aus dem Stand der Technik bewegt wird. Bei dieser Variante würde eine Hub-/Kippeinrichtung verwendet, welche noch älter ist als die Hub-/Kippeinrichtung nach der EP 2 537 668 A2. Die benötigte Stellfläche 42 ist bei diesem Beispiel aus dem Stand der Technik nochmals größer.

Bei einer erfindungsgemäßen Ballenpresse 1 mit der Hub-/Kippeinrichtung 4 sind ebenfalls nicht näher dargestellte bekannte Kontrollmechanismen vorgesehen, beispielsweise in Form einer Abstandsmesseinrichtung oder Prüfmitteln, die den Abstand zwischen dem Sammelbehälter 5 beim Einschieben des Sammelbehälters 5 in die Einschubhalterung 6 bewerten.

Nicht bzw. nur sehr vereinfacht dargestellt wurde in den Figuren die üblicherweise zu einer Ballenpresse gehörende Antriebseinrichtung 64 für das Bewegen des Presskörpers und eventuell weiterer bewegbarer Bauteile oder Baugruppen der Ballenpresse sowie die Steuerungseinheit 65.

Die Erfindung beschränkt sich nicht auf das Ausführungsbeispiel.

So kann die Geschwindigkeit der Hubbewegung und/oder die Geschwindigkeit der Schwenkbewegung von Teilen und Baugruppen der Hub-/Kippeinrichtung an sich und in Teilabschnitten der Bewegung von der Ausgangsstellung in die Endstellung (Entleerungsposition) und zurück in die Ausgangsstellung verschieden groß und zueinander variabel sein, wozu einzelne Teile oder Baugruppen der Hub-/Kippeinrichtung in Form und Dimension anders sein können, als dies in dem Ausführungsbeispiel nach den Figuren 1 bis 9 gezeigt und in der Beschreibung dargestellt ist.

Eine solche Anpassung der Hub-/Kippeinrichtung kann auch erforderlich sein, wenn die Bedingungen am Ort der Aufstellung und Benutzung der Ballenpresse eine Ausführung der Erfindung gemäß den Ausführungsbeispielen nach den Figuren und nach der Beschreibung nicht erlauben. Diese Bedingungen können zum einen die vorhandene Höhe des Raumes am Aufstellungsort als auch die Deckenform und die verfügbaren Flächen neben der Ballenpresse sein. Durch eine solche Anpassung in Form und Dimension wird der Kerngedanke der Erfindung nicht zwangsläufig verlassen.

### Bezugsziffernverzeichnis:

- 1: Ballenpresse
- 2: Presskörper (Pressplatte)
- 3: Pressrichtung
- 4: Hub-/Kippeinrichtung
- 5: Sammelbehälter
- 5a: untere äußere Körperkante
- 5b: obere äußere Körperkante
- 5c: obere vordere Körperkante (der Ballenpresse zugewandt)
- 6: Halterung für Sammelbehälter (Halteeinheit)
- 7: Seitenwand
- 8: Grundplatte
- 9: erstes Gelenk
- 10: zweites Gelenk
- 11: erster Hebel (Hebearm)
- 12: zweiter Hebel (Zugarm)
- 13: längeneinstellbares Ausgleichselement
- 14: vorderer Endbereich des ersten Hebels 11
- 15: dritter Hebel (Hebe- und Schwenkarm)
- 16: drittes Gelenk
- 17: viertes Gelenk
- 18: längeneinstellbarer vierter Hebel (Zugarm)
- 19: fünfter Hebel (Schwenkarm)
- 20: fünftes Gelenk
- 21: sechstes Gelenk
- 22: siebentes Gelenk
- 23: abgewinkeltes Ende des ersten Hebels 11
- 24: abgewinkeltes Ende des zweiten Hebels 12
- 25: Hydraulikzylinder
- 26: Verbindungsteil
- 27: Auflage / Abstützung
- 28: Verbindungssteg

- 30: Gehäuse
- 31: hinteres Gehäusemodul (mit Antriebseinheit)
- 32: mittleres Gehäusemodul
- 33: vorderes Gehäusemodul (Pressraum, Presskasten)
- 34: Vorraum (Sammelraum)
- 35: Einfüllschacht
- 36: Schlitze (in Pos. 33)
- 37: Tür (Stirnfläche des Pressraums, Gegenplatte)
- 38: Scharniere
- 39: Führungsbleche
- 40: Aufstellfläche (für Pos. 1)
- 41: Lauffläche (für den Bediener)
- 42: Stellfläche für den Sammelbehälter (nach Stand der Technik)
- 43: Fläche für den Ballenauswurf
- 44: Transportfläche (für den Ballen)
- 45: zweiter Transportweg nach Stand der Technik für die Zuführung eines Sammelbehälters
- 46: Weg für den Abtransport des Ballens
- 47: erster Transportweg nach Stand der Technik für die Zuführung eines Sammelbehälters
- 48: Funktionshöhe im Raum
- 49: Ballen
- 50: erster Kreisbogen
- 51: Radius vom ersten Kreisbogen
- 52: zweiter Kreisbogen
- 53: dritter Kreisbogen
- 54: Radius vom zweiten Kreisbogen
- 55: Radius vom dritten Kreisbogen
- 56: Bewegungslinie (der oberen äußeren Kante 5b von Pos. 5)
- 57: Bewegungslinie (der unteren äußeren Kante 5a von Pos. 5)
- 58: Stirnseite (von Pos 1)
- 59: Hackseite (von Pos 1)
- 60: Arbeitsraum
- 61: Bodenfläche
- 62: Seitenwand
- 63: Transportweg nach der Erfindung für die Zuführung eines Sammelbehälters
- 64: Antriebseinheit (4 Pos 2)
- 65: Steuerungseinheit

## Patentansprüche

1. Ballenpresse zum Verdichten von Abfall-Material, wie Kartonagen und dergleichen Verpackungsmaterial, umfassend
- ein Gehäuse (30),
- einen in dem Gehäuse (30) horizontal bewegbar angeordneten Presskörper (2),
- eine Antriebseinheit (64) für den Presskörper (2),
- eine Steuerungseinheit (65),
- einen vor dem Presskörper (2) angeordneten Sammelraum (34),
- einen in Pressrichtung (3) nach dem Sammelraum (34) vorhandenen Pressraum (33),
- einen oberhalb des Sammelraums (34) angeordneten Einfüllschacht (35), welcher nach oben offen ist und nach unten in den Sammelraum (34) mündet, wobei,
- in Pressrichtung (3) gesehen, die dem Presskörper (2) gegenüber liegende stirnseitige Wand des Pressraums (33) als Tür (37) ausgebildet ist, sowie
- eine Hub-/Kippeinrichtung (4), die einenends eine Halterung (6) für die Ankopplung eines Sammelbehälters (5) hat und anderenends mit einem Antrieb (25) verbunden ist sowie
- ausgebildet ist zum Bewegen des mit Abfall-Material gefüllten Sammelbehälters (5) aus seiner Ausgangsstellung, in welcher die Ankopplung des Sammelbehälters (5) an die Hub-/Kippeinrichtung (4) erfolgt, in eine Endstellung zur Entleerung des Abfall-Materials infolge der Schwerkraft in die Öffnung des Einfüllschachtes (35) hinein, welches durch diesen hindurch in den mit dem Pressraum (33) verbundenen Sammelraum (34) vor den Presskörper (2) gelangt,
**dadurch gekennzeichnet, dass**
- die Hub-/Kippeinrichtung (4) derart an dem Gehäuse (30) der Ballenpresse (1) angeordnet ist, dass
- eine Stellfläche (42) zur Positionierung und Ankopplung des Sammelbehälters (5) an eine Halterung (6) der Hub-/Kippeinrichtung (4) mit einer Funktionsfläche (43) bei der Ballenpresse (1) zusammenfällt, welche für den Auswurf eines Ballens (49) vorhanden ist, sodass die Ankopplung des Sammelbehälters (5) an die Hub-/Kippeinrichtung (4) stirnseitig vor dem Gehäuse (30) der Ballenpresse (1) erfolgt,
- wobei die Hub-/Kippeinrichtung (4) so ausgebildet ist, dass Teilelemente der Hub-/Kippeinrichtung (4), welche zum An- und Abkoppeln des Sammelbehälters (5) vor der Tür (37) positioniert werden, in eine Position oberhalb des vorderen, den Pressraum enthaltenden, Gehäusemoduls (33) oder des mittleren Gehäusemoduls (32) bewegt und dort geparkt werden können.

2. Verfahren zum Befüllen einer Ballenpresse zum Verdichten von Abfall-Material, wie Kartonagen und dergleichen Verpackungsmaterial, welche umfasst
- ein Gehäuse (30),
- einen in dem Gehäuse (30) horizontal bewegbar angeordneten Presskörper (2),
- eine Antriebseinheit (64) für den Presskörper (2),
- eine Steuerungseinheit (65),
- einen vor dem Presskörper (2) angeordneten Sammelraum (34),
- einen in Pressrichtung (3) nach dem Sammelraum (34) vorhandenen Pressraum (33),
- einen oberhalb des Sammelraums (34) angeordneten Einfüllschacht (35), welcher nach oben offen ist und nach unten in den Sammelraum (34) mündet, wobei,
- in Pressrichtung (3) gesehen, die dem Presskörper (2) gegenüber liegende stirnseitige Wand des Pressraums (33) als Tür (37) ausgebildet ist, sowie
- eine Hub-/Kippeinrichtung (4), die einenends eine Halterung (6) für die Ankopplung eines Sammelbehälters (5) hat und anderenends mit einem Antrieb (25) verbunden ist sowie
- ausgebildet ist zum Bewegen des mit Abfall-Material gefüllten Sammelbehälters (5) aus seiner Ausgangsstellung, in welcher die Ankopplung des Sammelbehälters (5) an die Hub-/Kippeinrichtung (4) erfolgt, in eine Endstellung zur Entleerung des Abfall-Materials infolge der Schwerkraft in die Öffnung des Einfüllschachtes (35) hinein, welches durch diesen hindurch in den mit dem Pressraum (33) verbundenen Sammelraum (34) vor den Presskörper (2) gelangt, mit Abfall-Material, *bei dem*
- ein mit Abfall-Material gefüllter Sammelbehälter (5) in der Hub-/Kippeinrichtung (4) positioniert und arretiert wird,
- sodann der Sammelbehälter (5) von seiner Ausgangsstellung zum Entleeren in eine Endstellung und wieder zurück in die Ausgangsstellung mittels einer um ein erstes Gelenk schwenkenden Hebebewegung angehoben wird,
- und, zumindest zeitweilig, während dieser schwenkenden Hebebewegung der Sammelbehälter (5) eine weitere Schwenkbewegung erfährt, für eine allmähliche Neigung/Kippung seiner Oberkante um ein weiteres Gelenk und zum Wiederaufrichten während der Rückkehr in seine Ausgangsstellung,
- abschließend der entleerte Sammelbehälter (5) entriegelt und aus der Hub-/Kippeinrichtung (4) entnommen wird.
**dadurch gekennzeichnet, dass**
Teilelemente der Hub-/Kippeinrichtung (4), welche zum An- und Abkoppeln des Sammelbehälters (5) vor der Tür (37) positioniert werden, zumindest unmittelbar vor dem Ausstoß eines fertig gestellten Ballen (49) in eine Position oberhalb des vorderen, den Pressraum (33) enthaltenden Gehäusemoduls oder des mittleren Gehäusemoduls (32) bewegt und dort zeitweilig geparkt werden.

## Claims

1. A baler for compressing waste material like cardboard and similar packaging material, the baler comprising:
- a housing (30),
- a press element (2) that is arranged horizontally movable in the housing (30),
- a drive unit (64) for the press element (2),
- a control unit (65),
- a collecting space (34) arranged in front of the press element (2),
- a press cavity (33) that is provided in the pressing direction (3) after the collecting cavity (34),
- a fill in shaft (35) that is arranged above the collecting cavity (34) and that is open in an upward direction and that leads into the collecting cavity (34) in an downward direction,
- wherein a face wall of the pressing cavity that is arranged opposite to the pressing element (2) in the pressing direction (3) is configured as a door (37), and
- a lifting/tipping device (4) that includes a support (6) for coupling a collecting container (5) at one end and which is connected with a drive (25) at another end, and
- configured to move the collecting container (5) that is filled with the waste material from a starting position where the collecting container (5) is coupled to the lifting and tipping device (4) into an end position for emptying the waste material gravity induced into an opening of the filling shaft (35) wherein the waste material moves through the filling shaft into a collecting cavity (34) that is connected with the pressing cavity (33) and arranged in front of the pressing element (2),
**characterized in that**
- the lifting and tipping device (4) is arranged at the housing (30) of the baler (1) so that
- a placement surface (42) for positioning and coupling the collecting container (5) to a support (6) of the lifting and tipping device (4) coincides with a functional surface (43) of the baler (1) wherein the functional surface is provided for ejecting a bale (49) so that the collecting container is coupled to the lifting and tipping device (4) at a face side in front of the housing of the baler (1),
- wherein the lifting and tipping device (4) is configured so that elements of the lifting and tipping device (4) that are positioned in front of the door (37) for coupling and decoupling the collection container (5) are movable into a position above a front housing module (33) that includes the pressing cavity or of the center housing module (32) and wherein the elements of the lifting and tipping device are storable in the position.

2. A method for filling a baler for compressing waste material like e.g. card board and similar packing material, the baler comprising:
- a housing (30),
- a press element (2) that is arranged horizontally movable in the housing (30),
- a drive unit (64) for the press element (2),
- a control unit (65),
- a collecting space (34) arranged in front of the press element (2),
- a press cavity (33) that is provided in the pressing direction (3) after the collecting cavity (34),
- a fill in shaft (35) that is arranged above the collecting cavity (34) and that is open in an upward direction and that leads into the collecting cavity (34) in an downward direction,
- wherein a face wall of the pressing cavity that is arranged opposite to the pressing element (2) in the pressing direction (3) is configured as a door (37), and
- a lifting/tipping device (4) that includes a support (6) for coupling a collecting container (5) at one end and which is connected with a drive (25) at another end, and
- configured to move the collecting container (5) that is filled with the waste material from a starting position where the collecting container (5) is coupled to the lifting and tipping device (4) into an end position for emptying the waste material gravity induced into an opening of the filling shaft (35) wherein the waste material moves through the filling shaft into a collecting cavity (34) that is connected with the pressing cavity (33) and arranged in front of the pressing element (2),
- wherein a collecting container (5) that is filled with waste material is positioned and locked in the lifting and tipping device (4),
- wherein the collecting container (5) is lifted thereafter from its starting position into an end position for emptying and back again into the starting position by a lifting movement that pivots about a first joint, and
- wherein the collecting container (5) goes through an additional pivot movement at least for a period of time during the pivoting lifting movement so that an upper edge of the collecting container is gradually inclined or pivoted about an additional joint and so that the collecting container is resurrected during a return of the collecting container into its starting position,
- wherein the emptied collecting container (5) is subsequently unlocked and removed from the lifting-pivoting arrangement (4),
**characterized in that**
elements of the lifting and tipping arrangement (4) which are positioned in front of the door (37) for coupling and decoupling the collecting container (5) are moved into a position above the front housing module that includes the pressing cavity (33) or of the center housing module (32) and temporarily stored in this position.

## Revendications

1. Presse à balles pour le compactage de matériaux de déchets, tels que cartons et matériaux d'emballage similaires, comprenant
- un boîtier (30),
- un corps de compactage (2) disposé de manière horizontalement mobile dans le boîtier (30),
- une unité d'entraînement (64) pour le corps de compactage (2),
- une unité de commande (65),
- un compartiment collecteur (34) disposé devant le corps de compactage (2),
- un compartiment de compactage (33) présent après le compartiment collecteur (34) dans la direction du compactage (3),
- un puits de remplissage (35) disposé au-dessus du compartiment collecteur (34) qui est ouvert vers le haut et s'ouvre vers le bas dans le compartiment collecteur (34),
- la paroi frontale du compartiment de compactage (33) opposée au corps de compactage (2), vue dans la direction de compactage (3), étant adaptée comme une porte (37), ainsi qu'un
- dispositif de soulèvement/basculement (4) qui présente à une extrémité un support (6) pour accoupler un récipient collecteur (5) et qui, à l'autre extrémité, est relié à un entraînement (25) et
- est adapté pour déplacer le récipient collecteur (5) rempli de déchets depuis sa position initiale, dans lequel l'accouplement du récipient collecteur (5) avec le dispositif de soulèvement/basculement (4) a lieu, dans une position finale pour verser les déchets dans l'ouverture du puits de remplissage (35) par l'effet de la gravité, et les déchets passant à travers de ce dernier dans le compartiment collecteur (34) relié au compartiment de compactage (33) et devant le corps de compactage (2), **caractérisé en ce que**
- le dispositif de soulèvement/basculement (4) est disposé sur le boîtier (30) de la presse à balles (1) de telle manière
- qu'une surface de positionnement (42) pour positionner et coupler le récipient collecteur (5) à un support (6) du dispositif de soulèvement/basculement (4) coïncide avec une surface fonctionnelle (43) de la presse à balles (1) présente pour l'éjection d'une balle (49) de sorte que le récipient collecteur (5) est accouplé au dispositif de soulèvement/basculement (4) sur la face frontale devant le boîtier (30) de la presse à balles (1),
- le dispositif de soulèvement/basculement (4) étant adapté de telle sorte que des éléments partiels du dispositif de soulèvement/basculement (4), qui sont positionnés devant la porte (37) pour accoupler et désaccoupler le récipient collecteur (5), peuvent être déplacés dans une position au-dessus du module de boîtier avant (33) contenant le compartiment de compactage ou le module de boîtier central (32) et peuvent y être remisés temporairement.

2. Procédé de remplissage d'une presse à balles pour compacter des matériaux de déchets, tels que des cartons et des matériaux d'emballage similaires, comprenant
- un boîtier (30),
- un corps de compactage (2) disposé de manière horizontalement mobile dans le boîtier (30),
- une unité d'entraînement (64) pour le corps de compactage (2),
- une unité de commande (65),
- un compartiment collecteur (34) disposé devant le corps de compactage (2),
- un compartiment de compactage (33) présent après le compartiment collecteur (34) dans la direction du compactage (3),
- un puits de remplissage (35) disposé au-dessus du compartiment collecteur (34) qui est ouvert vers le haut et s'ouvre vers le bas dans le compartiment collecteur (34),
- la paroi frontale du compartiment de compactage (33) opposée au corps de compactage (2), vue dans la direction de compactage (3), étant adaptée comme une porte (37), et
- dispositif de soulèvement/basculement (4) qui présente à une extrémité un support (6) pour accoupler un récipient collecteur (5) et qui, à l'autre extrémité, est relié à un entraînement (25), et
- est adapté pour déplacer le récipient collecteur (5) rempli de matériaux de déchets depuis sa position initiale, dans lequel l'accouplement du récipient collecteur (5) avec le dispositif de soulèvement/basculement (4) a lieu, dans une position finale pour verser les matériaux de déchets dans l'ouverture du puits de remplissage (35) par l'effet de la gravité, et les matériaux de déchets passant à travers de ce dernier dans le compartiment collecteur (34) relié au compartiment de compactage (33) et devant le corps de compactage (2), *dans lequel*
- un récipient collecteur (5) rempli de matériaux de déchets est positionné et verrouillé dans le dispositif de soulèvement/basculement (4),
- puis le récipient collecteur (5) est, pour être vidé, soulevé de sa position initiale dans une position finale et de nouveau dans la position initiale au moyen d'un mouvement de levage pivotant autour d'un premier joint,
- et, au moins temporairement, pendant ce mouvement de levage pivotant, le récipient collecteur (5) subit un autre mouvement de pivotement, pour une inclinaison/un basculement progressif de son bord supérieur autour d'une autre articulation et pour l'élevage pendant le retour à sa position initiale,
- enfin, le récipient collecteur (5) vidé est déverrouillé et retiré du dispositif de soulèvement/basculement (4),
**caractérisé en ce que**
des éléments partiels du dispositif de soulèvement/basculement (4), qui sont positionnés devant la porte (37) pour accoupler et désaccoupler le récipient collecteur (5), sont déplacés au moins immédiatement avant l'éjection d'une balle finie (49) dans une position au-dessus du module avant du boîtier contenant le compartiment de compactage ou le module central (32) et y sont temporairement remisés.
